# EUROPÄISCHE PATENTSCHRIFT

(11) **EP 1 090 195 B1**
(45) Veröffentlichungstag und Bekanntmachung des Hinweises auf die Patenterteilung: **21.05.2003**
(21) Anmeldenummer: 99923394.3
(22) Anmeldetag: 19.03.1999
(51) Int. Cl.: E04G 21/04, B66C 23/78

(54) **FAHRBARE BETONPUMPE**
TRAVELLING CONCRETE PUMP
POMPE A BETON MOBILE

(30) Priorität: 20.06.1998 DE 29811097 U
(43) Veröffentlichungstag der Anmeldung: 11.04.2001
(73) Patentinhaber: Waitzinger Baumaschinen Vertrieb und Service GmbH, 89278 Nersingen (DE)
(72) Erfinder: FETZER, Johann, Georg, D-89278 Nersingen (DE)
(74) Vertreter: Hentrich, Swen Dipl.-Phys. Dr.
(86) Internationale Anmeldenummer: DE9900877
(87) Internationale Veröffentlichungsnummer: WO99067482

(56) Entgegenhaltungen:
- EP-A- 0 357 988
- DE-A- 4 203 820
- DE-A- 4 344 779
- US-A- 3 985 036

## Beschreibung

Die Erfindung betrifft eine fahrbare Betonpumpe mit einem Fahrgestell, einem um eine vertikale Achse drehbaren, auf einem Mastbock angeordneten Verteilermast sowie mit vorderen Stützbeinen und hinteren Stützbeinen.

Derartige aus der Praxis bekannte fahrbare Betonpumpen werden benutzt, um auf Baustellen von einem zentralen Standort aus Beton weiträumig zu verteilen, so daß in einem Gießvorgang bei kontinuierlicher Zufuhr von Beton mittels Betonmischern großdimensionierte Betonplatten gegossen werden können. Darüber hinaus ergibt sich durch fahrbare Betonpumpen die Möglichkeit, Beton mit geringem Aufwand auf höher gelegene Arbeitsebenen zu transportieren, wozu in der Praxis schon fahrbare Betonpumpen eingesetzt werden, deren Verteilermast eine Höhe von 60 m überschreitet. Bei derartigen Abmessungen ist es offensichtlich, daß die Stabilität der fahrbaren Betonpumpe ein Problem darstellt. Um in jedem Betriebszustand der fahrbaren Betonpumpe mit beliebig ausgelenktem Verteilermast eine stabile Plattform zur Verfügung zu stellen, sind an dem Fahrgestell die vorderen und hinteren Stützbeine angeordnet, wobei diese ursprünglich den Ecken des Fahrgestells zugeordnet waren. Dies bedeutet aber, daß das gesamte Fahrgestell der von dem Verteilermast eingeleiteten Kraft ausgesetzt ist und entsprechend stabil gefertigt werden muß. Man ist daher dazu übergegangen, die Schwenklager der vorderen und. hinteren Stützbeine von den Ecken des Fahrgestelles weg einander weiter anzunähern, so daß das Schwenklager für die hinteren Stützbeine sich in der Nähe der hinteren Achse des Fahrgestelles befindet, hat dabei aber festgestellt, daß bei zunehmender Annäherung der Schwenklager Torsionsprobleme auftreten. Weiterhin sind dabei die Schwenklager sowohl der vorderen als auch der hinteren Stützbeine am Fahrgestell relativ weit hinten angeordnet, was erzwingt, daß die vorderen Stützbeine sehr weit nach vorn verstellbar sein müssen, wozu diese in der Regel teleskopierbar ausgebildet sind. Schließlich kragt auch der Mastbock am Fahrgestell weit nach vorn. Im Ergebnis erhöht sich durch die teleskopierbaren Stützbeine und den auskragenden Mastbock die Flexibilität der fahrbaren Betonpumpe, wo aber gerade Stabilitat notwendig ist und gewünscht wird.

Die vorderen und hinteren Stützbeine möchte man möglichst weit von dem Fahrgestell abspreizen können, um so einen sicheren Stand zu erreichen, wobei aber die vorderen und hinteren Stützbeine in ihrer Ruheposition zum Verfahren der fahrbaren Betonpumpe an dieser untergebracht sein müssen. Deshalb ist schon vorgeschlagen worden, um eine ausreichende Länge der vorderen und hinteren Stützbeine am Fahrgestell lagern zu können, die vorderen Stützbeine nach hinten und die hinteren Stützbeine nach vorne ragen zu lassen und dort zu lagern, um so die durch das Fahrgestell vorgegebene Länge ausnutzen zu können, was jedoch erfordert, daß auf der Baustelle neben der fahrbaren Betonpumpe ausreichend Platz zur Verfügung steht, damit die vorderen und hinteren Stützbeine aus ihrer Ruheposition in einer über den Scheitelpunkt führenden Kreisbewegung in ihre Arbeitsposition verstellt werden können. Weiterhin sind bei einigen fahrbaren Betonpumpen die Stützbeine als die zuvor schon erwähnten Teleskope ausgebildet, so daß sich in der Ruhestellung nur ein geringer Platzbedarf, in der Arbeitsstellung aber trotzdem eine große Reichweite ergibt. Nachteilig dabei ist, daß die Stabilität durch die Teleskope beeinträchtigt wird, wobei dies umso gravierender ist, je mehr Segmente das Teleskop aufweist.

Die DE 43 44 779 A1 zeigt eine fahrbare Betonpumpe der eingangs genannten Art, bei der die hinteren Stützbeine als Schwingen ausgebildet sind, die um eine im hinteren Bereich des Fahrgestells angeordnete Schwenkachse verstellt werden können. Die vorderen Stützbeinen haben eine kreisbogenförmige Gestalt und sind in ebenfalls kreisbogenförmigen Trägern gelagert. Zur Verstellung der vorderen Stützbeine aus der Ruheposition werden diese entlang der Peripherie eines Kreises verschoben, also nicht um eine Schwenkachse verschwenkt, um so einen größeren seitlichen Abstand von dem Fahrgestell zu erreichen. Nachteilig dabei ist, daß eine relativ große Führungslänge der kreisbogenförmigen Träger benötigt wird und eine Plazierung der vorderen Stützbeine eben nur auf dem Umfang des Kreises erfolgen kann, was starre Rahmenbedingungen an das Platzangebot auf Baustellen vorgibt. In dieser Offenlegungsschrift ist weiterhin gezeigt, daß neben dem vorderen Stützbein auch das hintere Stützbein kreisbogenförmig gestaltet sein kann, wobei dessen Verstellung entlang der Peripherie gegenüber den vorderen Stützbeinen auf einem Kreis mit übereinstimmenden oder abweichenden Radius erfolgt.

Der Erfindung liegt die Aufgabe zugrunde, eine fahrbare Betonpumpe der eingangs genannten Art so auszubilden, daß aufwendige Versteifungen des Fahrgestells zur Vermeidung von Torsionen zwischen den Schwenklagern der vorderen und hinteren Stützbeine vermieden werden und die vorderen und hinteren Stützbeine in langen Ausführungsformen am Fahrgestell gelagert werden können, ohne daß sich dadurch ein großer Platzbedarf bei der Überführung aus der Ruhestelllung in die Arbeitsstellung ergibt.

Diese Aufgabe wird nach der Erfindung bei einer fahrbaren Betonpumpe der eingangs genannten Art dadurch gelöst, daß jeweils das auf einer Seite des Fahrgestells angeordnete vordere Stützbein und hintere Stützbein eine gemeinsame, am Fahrgestell angeordnete, vertikale Schwenkachse aufweisen.
Dies bietet den Vorteil, daß nur der Bereich unmittelbar zwischen dem Mastbock und der Schwenkachse besonders stabil ausgeführt sein muß, da vom Verteilermast über den Mastbock und diesem Zwischenbereich die Kräfte unmittelbar in die Stützbeine eingeleitet werden, so daß das übrige Fahrgestell damit nicht belastet ist. Die Anordnung der Schwenklager auf einer gemeinsamen Schwenkachse ergibt weiterhin einen Platzgewinn, weil die Stützbeine in Längsrichtung des Fahrgestelles länger ausgeführt werden können, da kein Abstand zwischen den Schwenklagern mehr eingehalten werden muß.

Eine besonders bevorzugte Ausführungsform ist dadurch gekennzeichnet, daß die vorderen Stützbeine und die hinteren Stützbeine am Mastbock gelagert sind. Im Betrieb beim Pumpen kann der Verteilermast mit Mastbock und den vorderen und hinteren Stützbeinen als autarke Einheit aufgefaßt werden, die lediglich für die erwünschte Mobilität auf dem Fahrgestell angeordnet ist, das selber nicht verstärkt werden muß, so daß sich Kostenvorteile bei der Fertigung ergeben und darüberhinaus aufgrund des geringen Gewichtes eine höhere Zuladung möglich ist. Hinsichtlich eines ausreichenden Platzangebotes für eine stabile Lagerung ist es vorteilhaft, wenn dem Mastbock eine Basisplatte zugeordnet ist, an der die vorderen Stützbeine und die hinteren Stützbeine gelagert sind.

Es ist weiterhin vorgesehen, daß das
vordere Stützbein und das hintere Stützbein einer Seite auf einem koaxial zur Schwenkachse ausgerichteten Bolzen schwenkbar gelagert sind. Der dabei verwendete, ein gemeinsames Schwenklager für die vorderen und hinteren Stützbeine bildende Bolzen ist in einfacher Weise durch eine Halterung befestigt.

Eine etwas aufwendigere Halterung ist erforderlich, wenn das vordere Stützbein und das hintere Stützbein einer Seite auf separat gehaltenen, koaxial zur Schwenkachse ausgerichten Bolzen schwenkbar gelagert sind. Dadurch ergibt sich aber der Vorteil, daß simultan von dem vorderen Stützbein und dem hinteren Sützbein auf einen Bolzen einwirkende Torsions- und Knickkräfte vermieden sind.

Es ist weiterhin vorgesehen, daß
jedes vordere Stützbein durch ein um die Schwenkachse verschwenkbares Führungsrohr gebildet ist, in dem ein im Stützfuß des vorderen Stützbeines aufweisendes und in seiner Ruheposition durch das Führungsrohr hindurchragendes Gleitrohr verschiebbar gelagert ist. Diese Ausführungsform bietet den Vorteil, daß das vordere Stützbein in seiner Ruheposition derart am Fahrgestell positioniert werden kann, daß es nicht in den Bereich der Radkästen hineinragt, die für die Räder freizuhalten sind. Dabei weist das vordere Stützbein gegenüber einer ausschließlich mittels eines Teleskopes gebildeten Ausführungsform den Vorteil auf, daß das am Schwenklager angeschlossene Segment nicht die Basislänge limitiert, die durch den Abstand der für den Stützfuß zur Verfügung stehenden Lücke am Fahrgestell und dem Schwenklager gebildet ist. Die oftmals praktizierte Übung, die Schwenklager zur Erzielung einer ausreichenden Basislänge weiter nach rückwärts zu versetzen und so eine Kürzung der hinteren Stützbeine sowie eine notwendige Verstärkung des Fahrgestells hinzunehmen, ist nicht notwendig.

Zur Erzielung einer größeren Reichweite der vorderen Stützbeine ist es natürlich möglich, das Gleitrohr als Teleskop auszubilden und so die damit verbundenen Vorteile gleichfalls auszunutzen, wobei das erste Segment des Teleskopes die gesamte Länge des Gleitrohres ausnutzen kann.

Für eine möglichst kompakte Lagerung der vorderen Stützbeine am Fahrgestell ist es vorteilhaft, wenn dem Fahrgestell eine Ausnehmung zugeordnet ist, in die das rückwärtige Ende des Gleitrohres hineinragen kann. In diese Ausnehmung kann der über die Schwenkachse nach hinten hinausragende Teil des Gleitrohres eintreten, das so aus seiner Ruheposition verschwenkt werden und an den am Fahrgestell befindlichen Aufbauten vorbei geführt werden kann, um das Gleitrohr am Führungsrohr zu verschieben.

Eine alternative Ausführungsform zeichnet sich dadurch aus, daß das hintere Stützbein eine Aufnahme aufweist, in die das Gleitrohr in seiner Ruheposition hineinragt, weil so das hintere Stützbein dicker und steifer ausgebildet werden kann, ohne daß sich die kumulierte Bauhöhe von hinterem und vorderem Stützbein erhöht.

Zweckmäßigerweise weist bei dieser Ausführungsform das hintere Stützbein zwei Montageplatten auf, mit denen es an dem Bolzen angeschlossen ist und zwischen denen das vordere Stützbein mit dem Bolzen gekoppelt ist. Das hintere Stützbein ist dabei zwischen den Montageplatten soweit freigeschnitten, daß der Schwenkwinkel des Führungsrohres nicht beeinträchtigt ist.

Der Verteilermast mit dem Mastock ist benachbart zur Vorderachse unmittelbar an dem Fahrgestell angeschlossen, wodurch sich aufgrund des Verzichts auf Zwischenglieder die Steifigkeit erhöht und die Stabilität verbessert ist.

Im folgenden wird die Erfindung an in der Zeichnung dargestellten Ausführungsbeispielen näher erläutert; es zeigen:
- Fig. 1: eine Seitenansicht der erfindungsgemäßen fahrbaren Betonpumpe, mit in Ruhestellung befindlichen vorderen und hinteren Stützbeinen,
- Fig. 1a: eine der Fig. 1 entsprechende Darstellung einer Ausführungsform mit dem in das hintere Stützbein hineinragenden Gleitrohr des vorderen Stützbeins,
- Fig. 2: eine Draufsicht auf eine gegenüber Fig. 1 vereinfachte, schematische Darstellung ohne Verteilermast,
- Fig. 3: eine der Fig. 2 entsprechende Darstellung mit einer alternativen Stellung der vorderen und hinteren Stützbeine,
- Fig. 4: eine der Fig. 2 entsprechende Darstellung mit Plazierung des vorderen Stützbeines bei beengtem Raumangebot,
- Fig. 5: eine der Fig. 2 entsprechende Darstellungsweise einer Ausführungsform mit maximal ausgestellten, die größtmögliche Arbeitsfläche beanspruchenden vorderen und hinteren Stützbeinen,

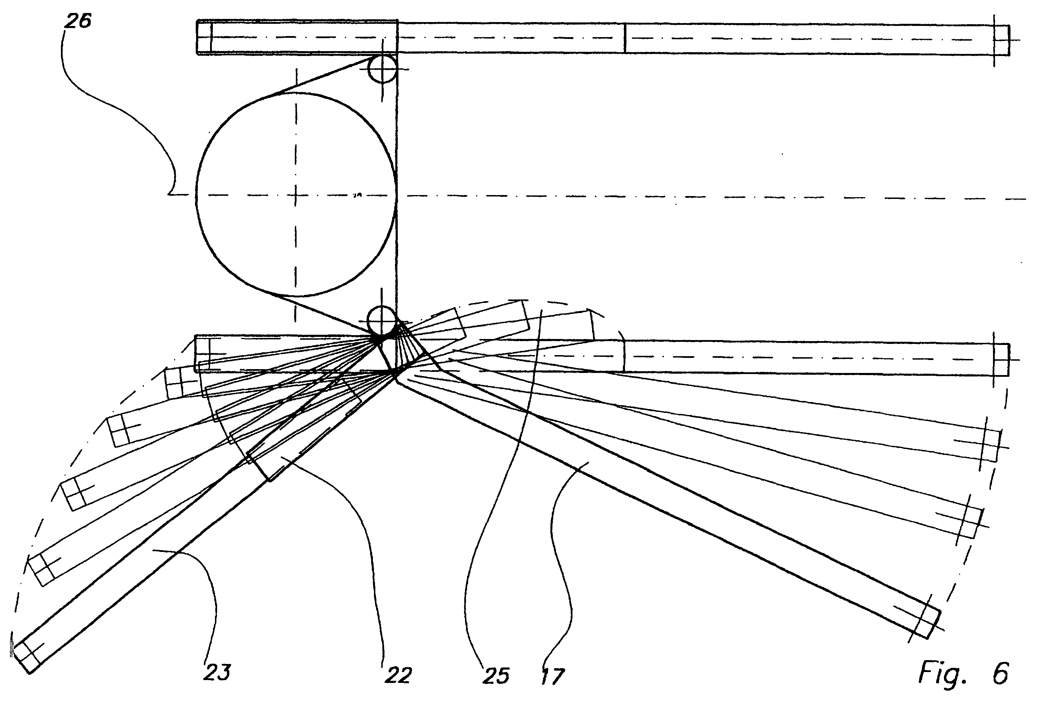

- Fig. 6: eine Draufsicht auf einen Mastbock mit vorderen und hinteren Stützbeinen, mit einer Abfolge der möglichen Stellungen des vorderen Stützbeines bei der Überführung von der Ruhestellung in die Arbeitsstellung,
- Fig. 7: eine schematische Darstellung der zwei koaxial ausgerichteten, die Schwenklager für die vorderen und hinteren Stützbeine bildenden Bolzen,
- Fig. 8: eine der Fig. 7 entsprechende Darstellung einer Ausführungsform mit einem für die Schwenklager der vorderen und hinteren Stützbeine gemeinsamen Bolzen, und

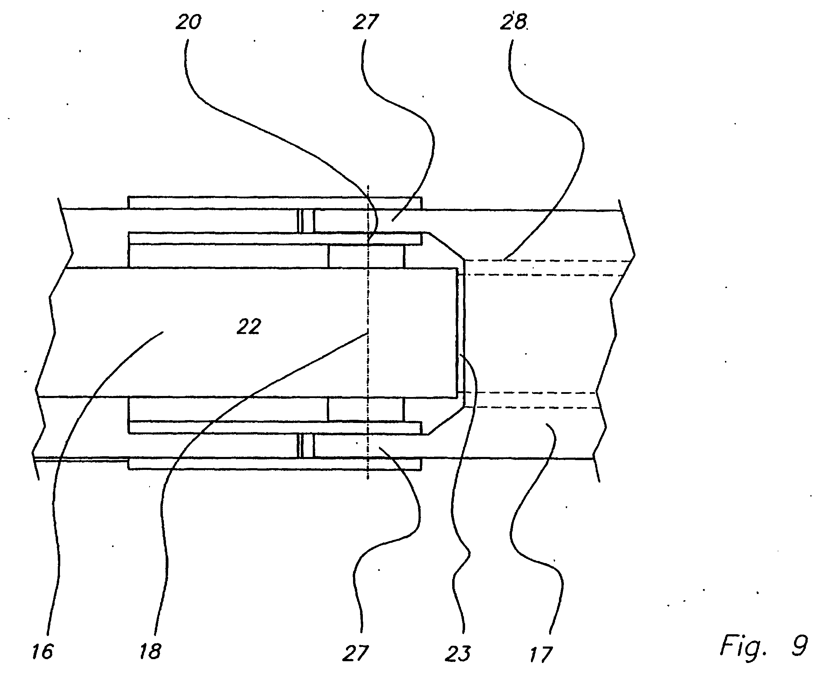

- Fig. 9: eine der Fig. 7 entsprechende Darstellung einer Ausführungsform mit dem in das hintere Stützbein hineinragenden Gleitrohr gemäß Fig. 1a.

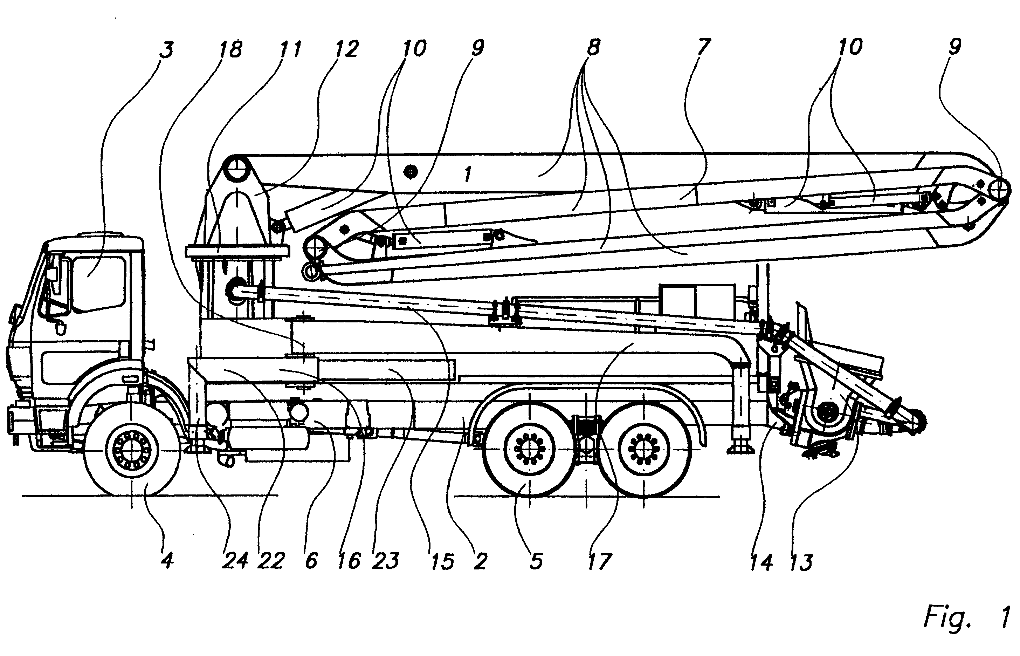

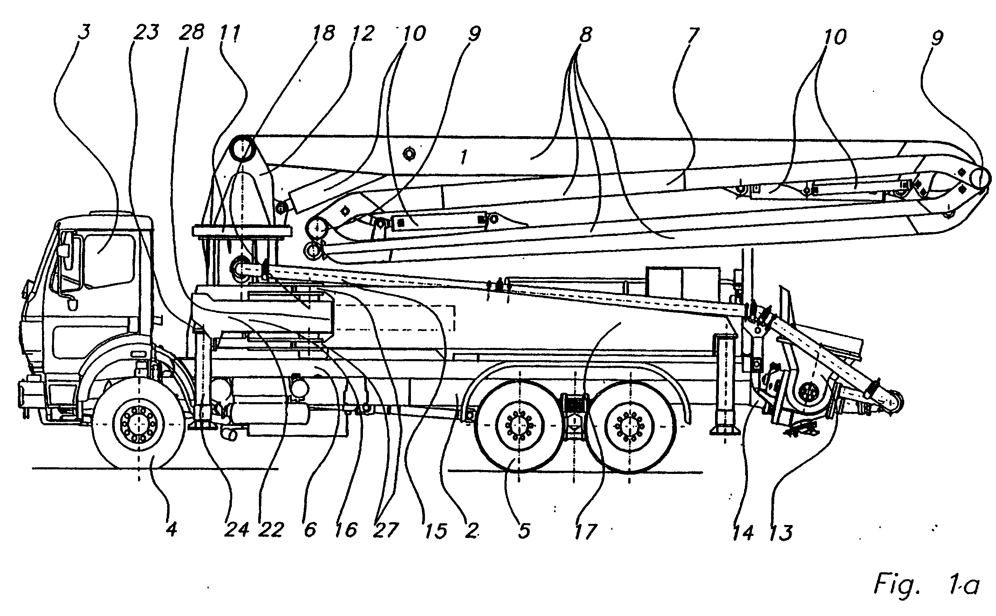

Die in Fig. 1 dargestellte fahrbare Betonpumpe 1 besteht aus einem Fahrgestell 2, das durch einen konventionellen Lkw mit Fahrerhaus 3, Vorderachse 4, einer hinteren Doppelachse 5 und einem diese Bestandteile verbindenden Rahmen 6 gebildet ist. Auf dem Fahrgestell 2 ist in seiner Ruheposition ein Verteilermast 7 gezeigt, der in der gezeigten Ausführungsform über vier Mastglieder 8 verfügt, die durch Gelenke 9 miteinander verbunden sind und durch Hydraulikeinrichtungen 10 gegeneinander verstellt werden können. Das stärkste, untere Mastglied 8 ist an einem Mastbock 11 angeschlossen, der seinerseits im vorderen Drittel des Abstandes zwischen der Vorderachse 4 und der Doppelachse 5 benachbart zur Vorderachse unmittelbar auf dem Fahrgestell 2 gelagert ist. Der Verteilermast 7 ist um eine vertikale Achse 12 verdrehbar, so daß durch Zusammenwirken mit den Gelenken 9 des Verteilermastes 7 jede beliebige Stelle innerhalb des Radius erreichbar ist, der sich durch den Verteilermast 7 in seiner gestreckten Konfiguration ergibt. Am hinteren Ende des Fahrgestelles 2 ist ein Beschickungskasten 13 angeordnet, durch den Beton einer Feststoffpumpe 14 zugeführt wird, die den Beton durch eine Leitung 15 zum Mastbock 11 und durch diesen zu einem am Verteilermast 7 angeordneten Schlauch pumpt, so daß der durch den Beschickungskasten 13 eingeführte Beton am freien Ende des Verteilermastes 7 aus dem Schlauch austritt und dort verarbeitet werden kann.

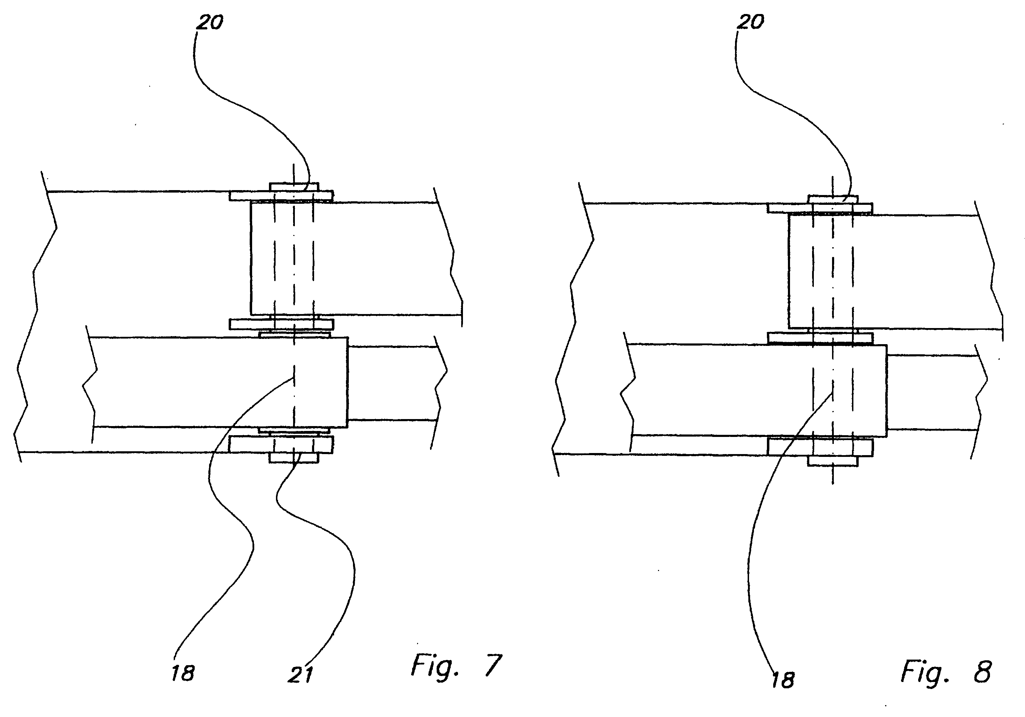

An dem Fahrgestell 2 sind zwei vordere Stützbeine 16 und zwei hintere Stützbeine 17 angeordnet, die dazu dienen, die fahrbare Betonpumpe 1 beim Pumpvorgang zu stabilisieren, damit ein Verschwenken des Verteilermastes 7 ohne Gefährdung von Personal oder Material möglich ist. Das jeweils auf einer Seite des Fahrgestells 2 angeordnete vordere Stützbein 16 und das hintere Stützbein 17 besitzen eine gemeinsame vertikale Schwenkachse 18, um die das dem vorderen Stützbein 16 und dem hinteren Stützbein 17 zugeordnete Schwenklager verdreht wird, wobei die vorderen Stützbeine 16 und hinteren Stützbeine 17 an einer dem Mastbock 11 zugeordneten Basisplatte 19 mittels der Schwenklager befestigt sind. Dabei ist bezüglich der Schwenklager in Fig. 7 eine Ausführungsform gezeigt, bei der das vordere Stützbein 16 und das hintere Stützbein 17 auf separaten, koaxial zueinander und zur Schwenkachse 18 ausgerichteten Bolzen 20,21 sitzen, während Fig. 8 eine Ausführungsform zeigt, bei der lediglich ein koaxial zur Schwenkachse 18 ausgerichteter Bolzen 20 genutzt ist.

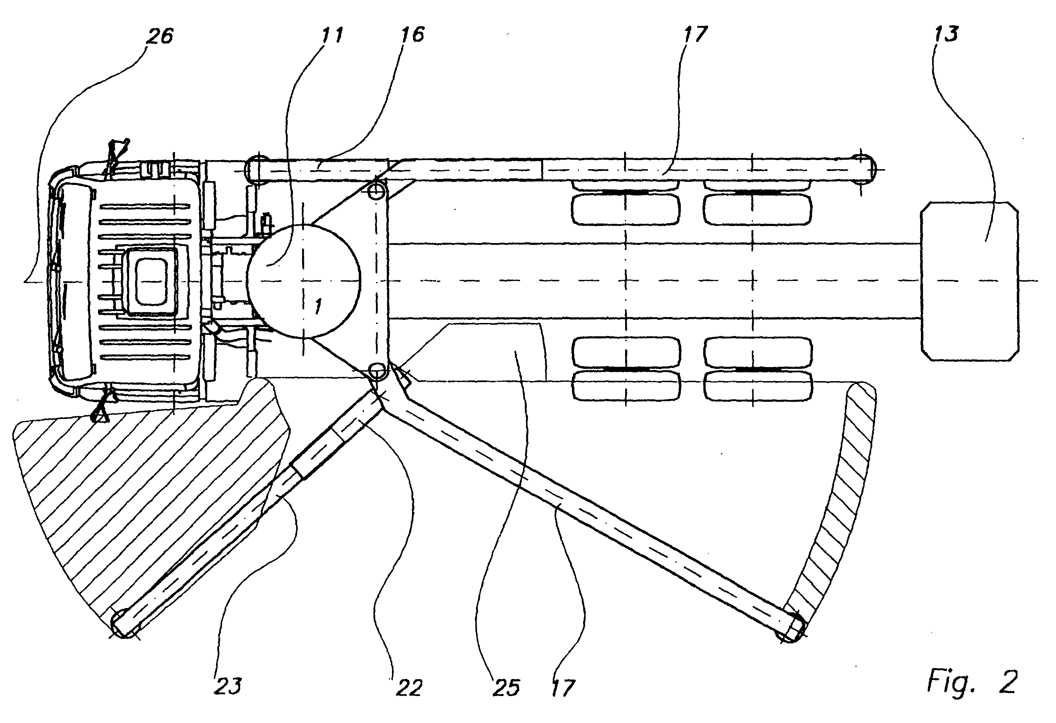

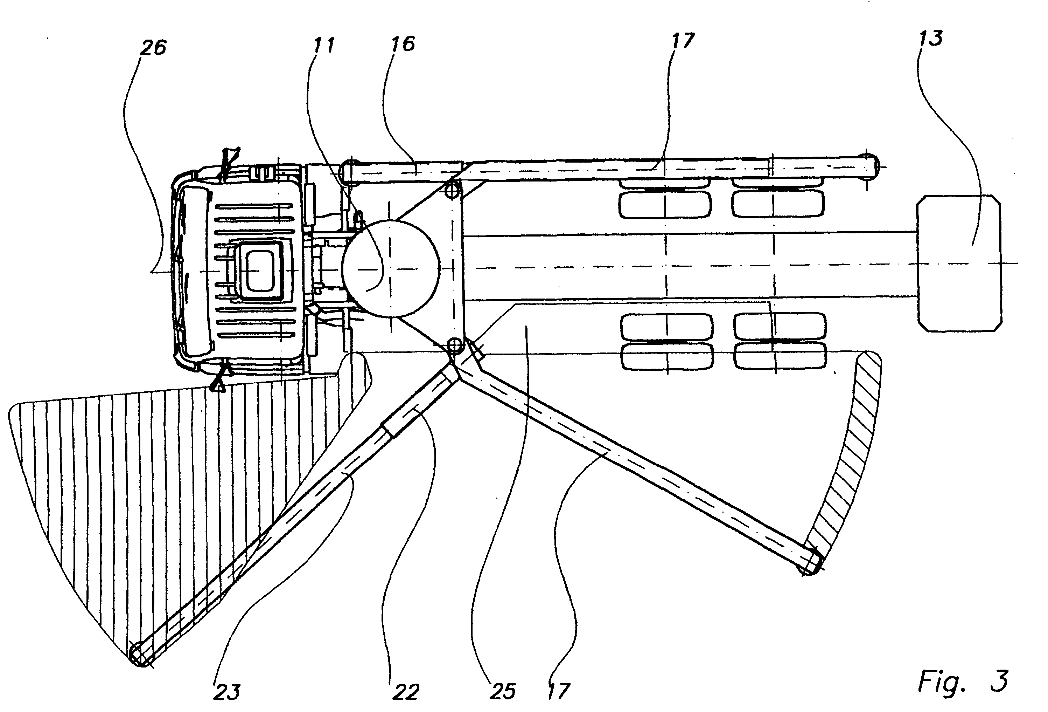

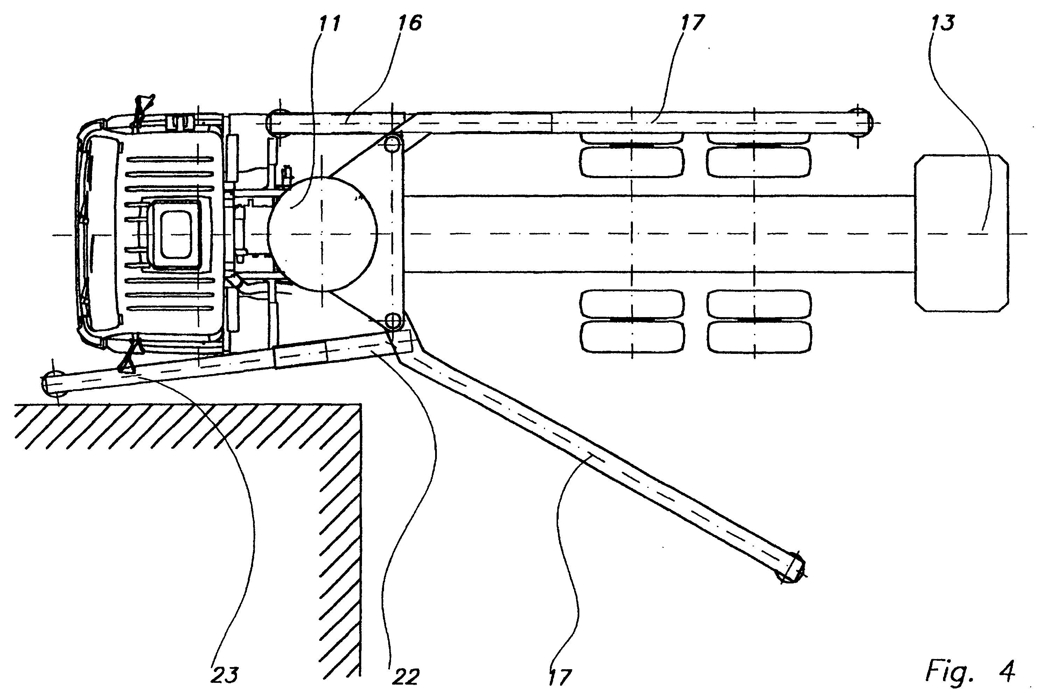

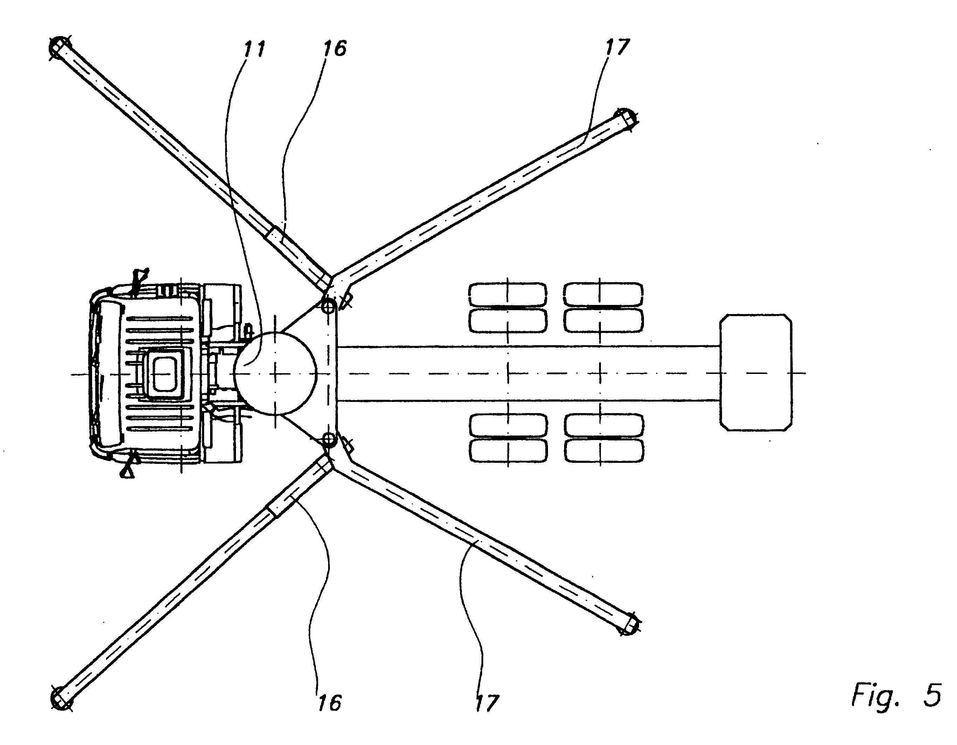

Wiederum aus Fig. 1 ist ersichtlich, daß das vordere Stützbein 16 durch ein um die Schwenkachse 18 verschwenkbares Führungsrohr 22 gebildet ist. In diesem Führungsrohr 22 ist ein Gleitrohr 23 verschiebbar gelagert, das in der in Fig. 1 gezeigten Ruheposition des vorderen Stützbeines 16 nach hinten durch das Führungsrohr 22 hindurchragt, so daß der am Gleitrohr 23 angeordnete Stützfuß 24 sich in der Ruheposition am Fahrgestell 2 in einer zur Verfügung stehenden Lücke befindet. An dem Fahrgestell 2 ist weiterhin eine aus Fig. 2 ersichtliche Ausnehmung 25 ausgebildet, in die das rückwärtige Ende des Gleitrohres 23 hineinragen kann, so daß zur Überführung des vorderen Stützbeines 16 aus der in Fig. 1 gezeigten Ruheposition in die in Fig. 2 ersichtliche Arbeitsposition das Führungsrohr 22 mit dem Gleitrohr 23 aus einer zur Längsachse 26 des Fahrgestelles 2 parallelen Lage verschwenkt werden kann. Für diese Schwenkbewegung ist auf der Baustelle für den Einsatz der fahrbaren Betonpumpe 1 selber nur wenig Platz notwendig, da das Verschieben des Gleitrohres 23 innerhalb des Führungsrohres 22 erst erfolgt, wenn der gewünschte Schwenkwinkel erreicht ist. In dieser Lage erfolgt dann die Verschiebung des Gleitrohres 23, um den vorderen Abstützungpunkt ausreichend weit vom Mastbock 11 zu verschieben. Aus den Figuren 2 - 5 ist ersichtlich, daß je nach zur Verfügung stehendem Platzangebot, eine unterschiedliche Positionierung der vorderen Stützbeine 16 möglich ist. Um die Reichweite der vorderen Stützbeine 16 zu vergrößern, ist es weiterhin möglich, das Gleitrohr 23 als Teleskop auszubilden.

Fig. 1a zeigt eine weitere Ausführungsform, bei der das hintere Stützbein 17 eine Aufnahme 28 aufweist, in die das Gleitrohr 23 in seiner Ruheposition hineinragt. Das hintere Stützbein 17 weist dabei zwei Montagplatten 27 auf, mit denen es an dem Bolzen 20 angeschlossen ist, wobei das vordere Stützbein 16 zwischen den Montageplatten 27 zum Bolzen 20 geführt ist. Um bei dieser Konfiguratin den Schwenkwinkel des Führungsrohres 22 nicht zu verringern, ist das hintere Stützbein 17 zwischen den Montageplatten 27 soweit freigeschnitten, daß das dem hinteren Stützbein 17 zugewandte Ende des Führungsrohres 22 um den Bolzen 20 frei geschwenkt werden kann.

## Patentansprüche

1. Fahrbare Betonpumpe mit einem Fahrgestell (2), einem um eine vertikale Achse (12) drehbaren, auf einem Mastbock (11) angeordneten Verteilermast (7) sowie mit vorderen Stützbeinen (16) und hinteren Stützbeinen (17), **dadurch gekennzeichnet, daß** jeweils das auf einer Seite des Fahrgestells (2) angeordnete vordere Stützbein (16) und hintere Stützbein (17) eine gemeinsame, am Fahrgestell angeordnete, vertikale Schwenkachse (18) aufweisen.

2. Fahrbare Betonpumpe nach Anspruch 1, **dadurch gekennzeichnet, daß** die vorderen Stützbeine (16) und die hinteren Stützbeine (17) am Mastbock (11) gelagert sind.

3. Fahrbare Betonpumpe nach Anspruch 2, **dadurch gekennzeichnet, daß** dem Mastbock (11) eine Basisplatte (19) zugeordnet ist, an der die vorderen Stützbeine (16) und die hinteren Stützbeine (17) gelagert sind.

4. Fahrbare Betonpumpe nach einem der Ansprüche 1 bis 3, **dadurch gekennzeichnet, daß** das vordere Stützbein (16) und das hintere Stützbein (17) einer Seite auf einem koaxial zur Schwenkachse (18) ausgerichteten Bolzen (20) schwenkbar gelagert sind.

5. Fahrbare Betonpumpe nach einem der Ansprüche 1 bis 3, **dadurch gekennzeichnet, daß** das vordere Stützbein (16) und das hintere Stützbein (17) einer Seite auf separat gehaltenen, koaxial zur Schwenkachse (18) ausgerichteten Bolzen (20,21) schwenkbar gelagert sind.

6. Fahrbare Betonpumpe nach einem der Ansprüche 1 bis 5, **dadurch gekennzeichnet, daß** jedes vordere Stützbein (16) durch ein um die Schwenkachse (18) verschwenkbares Führungsrohr (22) gebildet ist, in dem ein den Stützfuß (24) des vorderen Stützbeines (16) aufweisendes und in seiner Ruheposition durch das Führungsrohr (22) hindurchragendes Gleitrohr (23) verschiebbar gelagert ist.

7. Fahrbare Betonpumpe nach Anspruch 6, **dadurch gekennzeichnet, daß** das Gleitrohr (23) als Teleskop ausgebildet ist.

8. Fahrbare Betonpumpe nach Anspruch 6 oder 7, **dadurch gekennzeichnet, daß** dem Fahrgestell (2) eine Ausnehmung (25) zugeordnet ist, in die das rückwärtige Ende des Gleitrohres (23) hineinragen kann.

9. Fahrbare Betonpumpe nach einem der Ansprüche 6 bis 8, **dadurch gekennzeichnet, daß** das hintere Stützbein (17) eine Aufnahme (28) aufweist, in die das Gleitrohr (23) in seiner Ruheposition hineinragt.

10. Fahrbare Betonpumpe nach Anspruch 9, **dadurch gekennzeichnet, daß** das hintere Stützbein (17) zwei Montageplatten (27) aufweist, mit denen es an dem Bolzen (20) angeschlossen ist und zwischen denen das vordere Stützbein (16) mit dem Bolzen (20) gekoppelt ist.

11. Fahrbare Betonpumpe nach Anspruch 9 oder 10, **dadurch gekennzeichnet, daß** das hintere Stützbein (17) zwischen den Montageplatten (27) soweit freigeschnitten ist, daß der Schwenkwinkel des Führungsrohres (22) nicht beeinträchtigt ist.

12. Fahrbare Betonpumpe nach einem der Ansprüche 1 bis 11, **dadurch gekennzeichnet, daß** der Verteilermast (7) mit dem Mastbock (11) benachbart zur Vorderachse (4) unmittelbar an dem Fahrgestell (1) angeschlossen ist.

## Claims

1. Mobile concrete pump having a chassis (2), a distributing mast (7) adapted to rotate about a vertical axis (12) and arranged on a mast bracket (11), and having front supporting legs (16) and rear supporting legs (17), **characterised in that** the front supporting leg (16) and rear supporting leg (17) respectively disposed on one side of the chassis (2) have a common vertical swivelling axis (18) disposed on the chassis.

2. Mobile concrete pump according to claim 1, **characterised in that** the front supporting legs (16) and the rear supporting legs (17) are mounted on the mast bracket (11).

3. Mobile concrete pump according to claim 2, **characterised in that** operatively associated with the mast bracket (11) is a base plate (19) on which the front supporting legs (16) and the rear supporting legs (17) are mounted.

4. Mobile concrete pump according to any of claims 1 to 3, **characterised in that** the front supporting leg (16) and the rear supporting leg (17) on one side are swivel-mounted on a pin (20) aligned coaxially with the swivelling axis (18).

5. Mobile concrete pump according to any of claims 1 to 3, **characterised in that** the front supporting leg (16) and the rear supporting leg (17) on one side are swivel-mounted on separately retained pins (20, 21) aligned coaxially with the swivelling axis (18).

6. Mobile concrete pump according to any of claims 1 to 5, **characterised in that** each front supporting leg (16) is constituted by a guide tube (22) adapted to swivel about the swivelling axis (18), and mounted so as to be displaceable in said guide tube (22) is a sliding tube (23) which incorporates the supporting foot (24) of the front supporting leg (16) and which in its rest position projects through the guide tube (22).

7. Mobile concrete pump according to claim 6, **characterised in that** the sliding tube (23) is constructed in the form of a telescope.

8. Mobile concrete pump according to claim 6 or 7, **characterised in that** operatively associated with the chassis (2) is a recess (25) into which the back end of the sliding tube (23) is able to project.

9. Mobile concrete pump according to any of claims 6 to 8, **characterised in that** the rear supporting leg (17) incorporates a recess (28) into which the sliding tube (23) projects in its rest position.

10. Mobile concrete pump according to claim 9, **characterised in that** the rear supporting leg (17) incorporates two fixing plates (27) by which it is attached to the pin (20) and between which the front supporting leg (16) is coupled to the pin (20).

11. Mobile concrete pump according to claim 9 or 10, **characterised in that** the rear supporting leg (17) is sufficiently clear of the fixing plates (27) for the swivel angle of the guide tube (22) not to be adversely affected.

12. Mobile concrete pump according to any of claims 1 to 11, **characterised in that** the distributing mast (7) with the mast bracket (11) is attached direct to the chassis (2), adjacent to the front axle (4).

## Revendications

1. Pompe à béton mobile montée sur un châssis roulant (2), comportant un mât distributeur monté en rotation autour d'un axe vertical (12) sur un chevalet de mât (11) et des béquilles de soutien avant (16) et arrière (17)
**caractérisé en ce** qui concerne
la béquille de soutien avant (16) et la béquille de soutien arrière (17) situées d'un même côté du châssis roulant (2) ont un même axe de pivotement (18') par rapport au châssis roulant

2. Pompe à béton mobile selon la revendication 1, **c e c q** les béquilles de soutien avant (16) et les béquilles de soutien arrière (17) sont montées sur le chevalet de mât (11)

3. Pompe à béton mobile selon la revendication 2, **c e c q** au chevalet de mât (11) est associée une plaque de base (19) sur laquelle sont sont montées les béquilles de soutien avant (16) et les béquilles de soutien arrière (17)

4. Pompe à béton mobile selon une des revendications 1 à 3, **c e c q** la béquille de soutien avant (16) et la béquille de soutien arrière (17) situées d'un même côté sont montées sur un pivot (20) coaxial à l'axe de pivotement (18)

5. Pompe à béton mobile selon une des revendications 1 à 3, **c e c q** la béquille de soutien avant (16) et la béquille de soutien arrière (17) situé d'un même côté sont montées sur des pivots distincts (20, 21) coaxiaux à l'axe de pivotement (18)

6. Pompe à béton mobile selon une des revendications 1 à 5, **c e c q** chaque béquille de soutien avant (16) est constituée par un tube de guidage (22) pouvant pivoter autour de l'axe (18) et dans lequel est monté coulissant un tube glissant (23) portant le pied d'appui (24) de la béquille de soutien avant (16) et qui, en position de repos, est rentré dans le tube de guidage (22)

7. Pompe à béton mobile selon la revendication 6, **c e c q** le tube glissant (23) est un tube télescopique

8. Pompe à béton mobile selon une des revendication 6 ou 7, **c e c q** le châssis roulant (2) présente un espace vide (25) dans lequel peut pénétrer l'extrémité arrière du tube glissant (23)

9. Pompe à béton mobile selon une des revendications 6 à 8, **c e c q** la béquille de soutien arrière (17) présente un logement (28) dans lequel vient se placer le tube glissant (23) en position de repos

10. Pompe à béton mobile selon la revendication 9, **c e c q** la béquille de soutien arrière (17) présente deux plaques de montage (27) par lesquelles elle est raccordée au pivot (20) et entre lesquelles la béquille de soutien avant (16) est accouplée au pivot (20)

11. Pompe à béton mobile selon une des revendications 9 ou 10, **c e c q** la béquille de soutien arrière (17) présente une découpe suffisante pour ne pas porter atteinte à l'angle de pivotement du tube de guidage (22)

12. Pompe à béton mobile selon une des revendications 1 à 11, **c e c q** le mât distributeur (7) par l'intermédiaire du chevalet de mât (11) est raccordé directement au châssis roulant (2) près de l'essieu avant (4)
